# EUROPÄISCHE PATENTSCHRIFT

(11) **EP 1 491 409 B1**
(45) Veröffentlichungstag und Bekanntmachung des Hinweises auf die Patenterteilung: **04.10.2006**
(21) Anmeldenummer: 04012994.2
(22) Anmeldetag: 02.06.2004
(51) Int. Cl.: B60R 21/01, B62D 1/06, G08B 21/06

(54) **Fahrzeugsicherheitssystem**
Vehicle safety system
Dispositif de sécurité pour véhicule

(30) Priorität: 26.06.2003 DE 20309877 U
(43) Veröffentlichungstag der Anmeldung: 29.12.2004
(73) Patentinhaber: TRW Automotive Safety Systems GmbH, 63743 Aschaffenburg (DE)
(72) Erfinder: Bossler, Hans-Jürgen, 64839 Münster (DE); Bollinger, Christian, 63741 Aschaffenburg (DE); Hirzmann, Guido, 63877 Sailauf (DE); Lefringhausen, Heinz-Jörg, 63533 Mainhausen (DE); Stegmann, Volker, 63743 Aschaffenburg (DE)
(74) Vertreter: Kitzhofer, Thomas

(56) Entgegenhaltungen:
- DE-A- 10 027 922
- DE-U- 20 309 877
- GB-A- 2 319 997
- US-A- 5 722 686
- US-A1- 2002 008 097
- US-B1- 6 254 127

## Beschreibung

Die Erfindung betrifft ein Fahrzeugsicherheitssystem mit einem Fahrzeuglenkrad, nach dem Oberbegriff des Anspruchs 1.

Moderne Fahrzeugsicherheitssysteme erfassen inzwischen immer mehr möglichst aktuelle Daten über Anwesenheit und Position von Fahrzeuginsassen. Hierzu gehört z.B., daß ein Gassack nur dann entfaltet wird, wenn der entsprechende Sitz auch besetzt ist, oder auch, daß der Gassack nicht ausgelöst wird, wenn ein Kindersitz auf dem Beifahrersitz montiert ist. Ein wichtiger Parameter ist auch der Abstand des Fahrzeuginsassen zum Gassackmodul, der die Entscheidung beeinflußt, ob und wenn ja in welcher Stärke ein Aufblasen des Gassacks bei einem Unfall erfolgt. Eine andere Anwendung, die zunehmend an Bedeutung gewinnt, ist die Überwachung der Fahrtüchtigkeit des Fahrers. In denkbaren zukünftigen Anwendungen könnte z.B. das Fahrzeug automatisch gestoppt oder ein Notarzt benachrichtigt werden, wenn eine Fahruntüchtigkeit festgestellt wird.

Die Sensorik zum Erhalt der notwendigen Daten sollte natürlich möglichst robust, unempfindlich gegen Störungen und gleichzeitig kostengünstig zu fertigen und zu montieren sein.

Hier bieten sich kapazitive Sensoren an, die, ganz allgemein gesprochen, eine Veränderung eines elektrischen oder elektromagnetischen Feldes, die durch die zu erfassende Person hervorgerufen wird, detektieren. Mit derartigen Sensoren lassen sich gegebenenfalls Gegenstände von Personen unterscheiden.

Prinzipiell sind kapazitive Sensoren und ihre Anwendung in Fahrzeugsicherheitssystemen z.B. in der US-B-6 254 127 beschrieben. Dort ist ein kapazitiver Sensor in der Abdeckkappe eines im Lenkrad angeordneten Gassackmoduls vorgesehen.

Die US 5 722 686 A, die die Merkmale des Oberbegriffs des Anspruchs 1 zeigt, beschreibt die Verwendung von aus leitfähigen Folien gebildeten kapazitiven Sensoren zur Positionsbestimmung eines Fahrzeuginsassen durch Veränderung der Kapazität. Eine der Elektroden ist in einer Abdeckkappe eines Gassackmoduls angeordnet, während eine zweite Elektrode im Lenkradkranz plaziert ist.

Kapazitive Sensoren werden auch zur Bestimmung der Position der Hände am Lenkrad eingesetzt, wie in der DE 100 27 922 A dargelegt ist. Mehrere über den Lenkradkranz verteilte Sensoren erlauben eine genaue Analyse der Anzahl und der Position der Finger, mit denen der Lenkradkranz gegriffen wird, um gegebenenfalls den Fahrer vor einer Gefahrensituation zu warnen oder um die Daten an einen Unfallschreiber weiterzugeben.

Die Erfindung schlägt eine Verbesserung eines oben genannten Fahrzeugsicherheitssystems vor. Diese besteht darin, daß bei einem derartigenFahrzeugsicherheitssystem die Merkmale des Anspruchs 1 vorgesehen sind.

Der Sensor enthält eine flexible Matte mit darin aufgenommenen langgestreckten elektrischen Leitern. Bevorzugt enthält der Sensor eine Vliesmatte. In dieser können z.B. Drähte eingeflochten sein. Der Aufbau kann damit analog einer Heizmatte bekannter Technologie angelegt sein. Ein derartiger Sensor ist so flexibel, daß er sich der Kontur des Lenkradkranzes problemlos anpassen läßt. Er läßt sich auch in beliebiger Größe und Form zuschneiden und am Lenkradkranz anordnen. Nicht zuletzt ist eine derartige Sensorkonstruktion extrem kostengünstig.

Neben dem offensichtlichen Vorteil, daß der Sensor stets mit dem Lenkrad verbunden bleiben kann, bietet diese Anordnung weitere Vorzüge. Zum einen kann direkt der Griff des Fahrers am Lenkrad erfaßt werden, so daß stets eine Information darüber vorliegt, wie viele Hände der Fahrer am Lenkrad hat. Da kapazitive Sensoren nicht nur im direkten Nahbereich, sondern durchaus bis zu einer Entfernung von über einem halben Meter ihr Ziel erfassen können, läßt sich gegebenenfalls sogar der Abstand des Fahrers zum Lenkrad ermitteln. Außerdem ist es möglich, die kapazitiven Sensoren im Lenkradkranz auf einfache und kostengünstige Weise zu integrieren, ohne daß sie vom Fahrer wahrgenommen werden. Die Sensorposition in der Kappe gemäß der US-B-6 254 127 ist insofern ungünstig, als die Kappe ein Bauteil darstellt, das normalerweise bei der Entfaltung des Gassacks zerstört wird, so daß die Fixierung und Verkabelung des Sensors aufwendig ist. Außerdem ist mit einer derartigen Sensoranordnung nur eine reine Abstandsmessung realisierbar.

Natürlich ist durch die Erfindung auch die Position der Hände am Lenkradkranz feststellbar.

Denkbar wäre, die Information über die Handhaltung des Fahrers am Lenkrad z.B. dazu zu verwenden, eine Autopilot-Funktion z.B. über ein GPS-System zu steuern, die automatisch die Kontrolle über das Fahrzeug übernimmt, sobald der Fahrer das Lenkrad losläßt oder mit Kopf oder Oberkörper das Lenkrad berührt. Die Autopilot-Funktion könnte weiter so gestaltet sein, daß sie sich wieder abschaltet, sobald die Hände wieder am Lenkrad sind.

Ebenfalls denkbar ist, die Information über die Griffposition bzw. ein Nicht-Festhalten des Lenkrads in einer Art "black box", analog zu dem in Flugzeugen verwendeten Aufzeichnungsgerät, abzuspeichern, um die Auswertung eventueller Unfallursachen zu erleichtern. So ließe sich z.B. nachträglich feststellen, daß der Fahrer nur mit einer Hand gelenkt hat oder gar keine Hand am Lenkrad hatte.

Bevorzugt sind mehrere Sensoren im oder am Lenkradkranz angeordnet, wodurch z.B. die Detektion der Hände am Lenkrad erleichtert und/oder eine genauere Abstandsmessung bzw. Positionserkennung z.B. des Oberkörpers oder des Kopfes des Fahrers ermöglicht wird.

Es können in einem Schnitt in radialer Richtung in Umfangsrichtung gesehen in oder am Lenkradkranz mehrere Sensoren angeordnet sein. Die Sensoren können aber auch alternativ oder zusätzlich in einem Schnitt senkrecht zur Drehachse des Lenkrads in Umfangsrichtung gesehen zu mehreren in oder am Lenkradkranz angeordnet sein.

Die Geometrie des Lenkradkranzes erlaubt vielfältige Anordnungen von Sensoren, so daß die für den jeweiligen Einsatzzweck optimale Konfiguration leicht zu realisieren ist.

Bevorzugt ist der Sensor unter einer den Lenkradkranz nach außen abschließenden, die Außenhaut des Lenkradkranzes bildenden Umhüllung angeordnet. Kapazitive Sensoren benötigen keine direkte Sichtverbindung zum zu detektierenden Objekt, so daß eine Schaum- oder Lederumhüllung, die über dem oder den Sensoren angeordnet ist, die Datenerfassung nicht stört. Auf diese Weise können die Sensoren sowohl optisch als auch haptisch verborgen werden, so daß sie das Erscheinungsbild des Lenkrades nicht stören. Hierbei kann jede zum Zusammenwirken mit einem kapazitiven Sensor geeignete Art der Umhüllung, z.B. eine Schaumschicht, Leder, glasfaserverstärkter Kunststoff oder Holz zum Einsatz kommen.

In einer bevorzugten Ausführungsform der Erfindung ist der Sensor oberhalb einer ein Skelett des Lenkrads umgebenden Umhüllung, z.B. einer Umspritzung oder Umschäumung, angeordnet. Bevorzugt liegt der Sensor also zwischen der Umhüllung des Lenkradskelettes und der den Lenkradkranz nach außen abschließenden Umhüllung des Lenkradkranzes. Damit sind der oder die Sensoren dicht unter der Oberfläche des Lenkradkranzes angeordnet, aber durch die äußere Umhüllung geschützt.

Der Sensor könnte auch durch wenigstens einen Abschnitt einer Lenkradheizung gebildet sein.

Mit Hilfe der am Lenkradkranz angeordneten kapazitiven Sensoren läßt sich ein Fahrzeugsicherheitssystem realisieren, in dem ein Gassacksystem und eine Steuereinheit vorgesehen sind, wobei das Gassacksystem in Abhängigkeit der vom Sensor erfaßten Daten über die Steuereinheit angesteuert wird, um z.B. zu entscheiden, in welcher Stärke das Gassacksystem bei einem Unfall ansprechen soll. Ebenso kann ein System realisiert werden, daß Anzahl und Position der Hände des Fahrers am Lenkrad erfaßt.

Es könnte mit Hilfe der vom Sensor erfaßten Daten eine Position eines Fahrzeuginsassen bestimmt werden.

Weitere Merkmale und Vorteile der Erfindung ergeben sich aus der nachfolgenden Beschreibung eines Ausführungsbeispiels in Verbindung mit den beigefügten Zeichnungen. In diesen zeigen:
- Figur 1 eine schematische Ansicht eines erfindungsgemäßen Fahrzeugsicherheitssystems;
- Figur 2 eine schematische Draufsicht auf ein Lenkrad eines erfindungsgemäßen Fahrzeugsicherheitssystems;
- Figur 3 einen Schnitt entlang der Linie III-III in Figur 2; und
- Figur 4 eine schematische Darstellung eines erfindungsgemäßen Sensors.

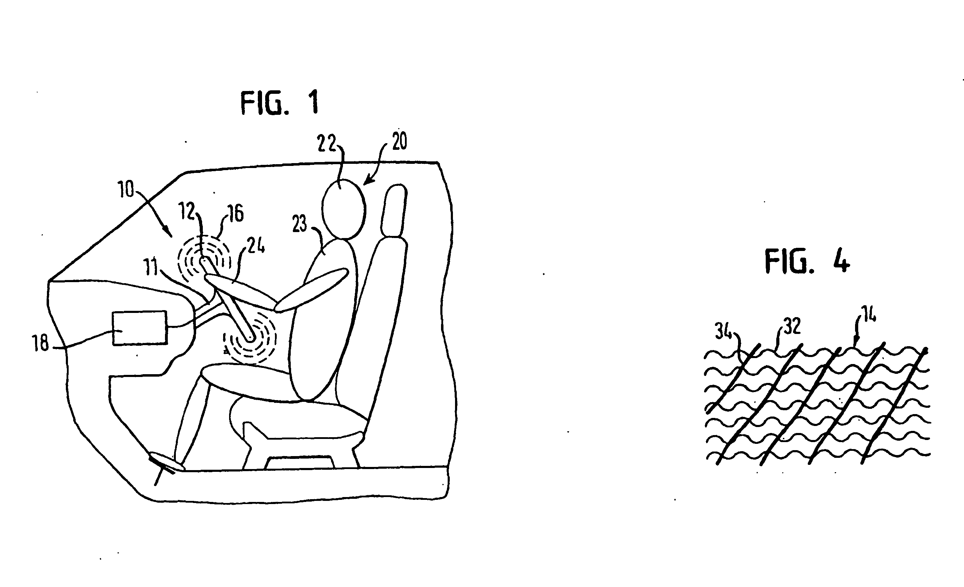

Figur 1 zeigt ein Fahrzeugsicherheitssystem mit einem Lenkrad 10, in dem ein bekanntes Gassackmodul als Teil eines bekannten Gassacksystems 11 aufgenommen ist, auf das hier nicht weiter eingegangen wird.

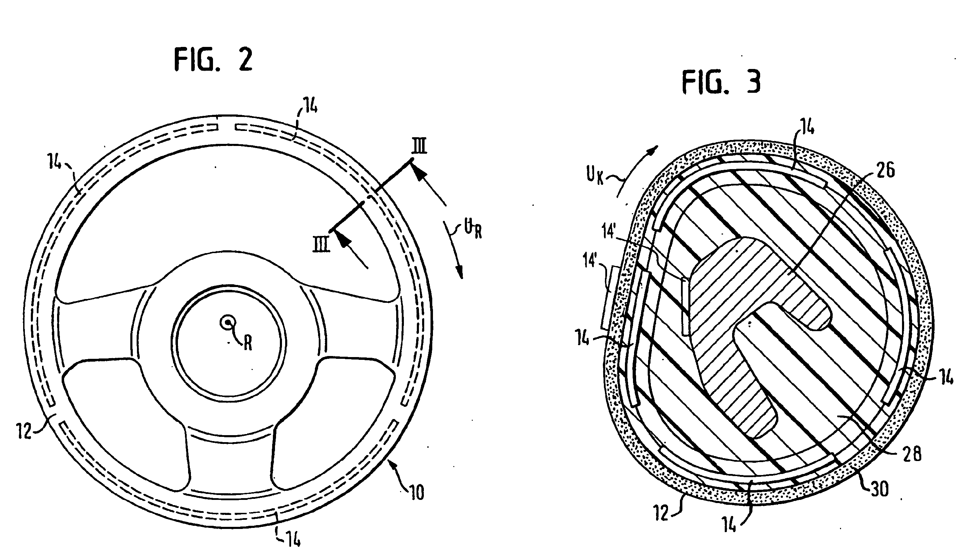

Im Lenkradkranz 12 sind in den Figuren 2 bis 4 näher dargestellte kapazitive Sensoren 14 angeordnet. Die kapazitiven Sensoren 14 sind Teil einer Sensoreinrichtung, die Veränderungen eines elektrischen oder elektromagnetischen Feldes 16 detektiert. Die Sensoren 14 übertragen ihre Daten an eine Steuereinheit 18, die zusammen mit den Sensoren 14 die Sensoreinrichtung bildet. Die Steuereinheit 18 wertet die Sensorsignale aus und stellt so Veränderungen des Felds 16 fest. Die Steuereinheit 18 kann auch die Erzeugung des elektrischen oder elektromagnetischen Feldes 16 beeinflussen. Das Feld 16 kann entweder von den Sensoren 14 selbst oder von nicht dargestellten, bekannten Quellen erzeugt werden.

Durch die Auswertung der von den Sensoren 14 übertragenen Daten wird erfaßt, ob und wie der Fahrzeuginsasse, in diesem Fall der Fahrer 20 das Lenkrad 10 festhält. Hierzu wird festgestellt mit wie vielen Händen 24 der Fahrer 20 das Lenkrad 10 hält und an welchen Positionen am Lenkradkranz 12 die Hände 24 liegen.

Eventuell könnte auch die Position seines Kopfes 22 bzw. Oberkörpers 23 und der Abstand der betreffenden Körperteile vom Lenkrad 10 erfaßt werden. Außerdem kann festgestellt werden, ob der Körper des Fahrers 20 auf dem Lenkrad 10 aufliegt.

Aufgrund dieser Daten kann im Fall eines Unfalls von der Steuereinheit 18 entschieden werden, ob und wenn ja in welchem Umfang der im Gassackmodul enthaltene Gassack entfaltet werden soll.

Zusammen mit Daten anderer System (z.B. eines pre-crash-Sensors) lassen sich Gefahrensituationen feststellen und gegebenenfalls die nötigen Schritte ergreifen. Dies kann z.B. ein Warnsignal für den Fahrer 20 sein.

In den Figuren 2 und 3 ist die Anordnung der kapazitiven Sensoren 14 im Lenkradkranz 12 näher dargestellt.

Wie in Figur 3 zu erkennen ist, sind die Sensoren 14 zwischen einer ein Skelett 26 des Lenkrads 10 umgebenden ersten Umhüllung 28 und einer das Lenkrad 10 bzw. den Lenkradkranz 12 nach außen abschließenden zweiten Umhüllung 30 angeordnet. Die erste Umhüllung 28 ist z.B. eine PUR-Umschäumung des Skeletts 26, während die zweite Umhüllung 30 eine flexible Schaumschicht oder eine Leder- oder Holzumhüllung ist.

In der in Figur 3 dargestellten Umfangsrichtung U_{K}, die den Umfang des Lenkradkranzes 12 in einem radialen Schnitt beschreibt, sind mehrere, längs des Umfangs U_{K} voneinander getrennte Sensoren 14 vorgesehen. In diesem Fall sind es vier Sensoren 14, Zahl und Anordnung können aber vom Fachmann gemäß den jeweiligen Anforderungen variiert werden.

Auch in einer senkrecht zur Drehachse R des Lenkrads 10 gelegenen Umfangsrichtung U_{R}, gezeigt in Figur 2, sind mehrere Sensoren 14 vorgesehen. Zahl und Anordnung der Sensoren 14 können auch hier variiert werden.

Die Anordnung sollte jedoch so gewählt sein, daß festzustellen ist, ob keine, nur eine oder beide Hände 24 den Lenkradkranz 12 erfassen und ob sich die Hände 24 in der normalen Griffposition, d.h. rechts und links der Lenkradnabe befinden.

Durch die Verwendung mehrerer Sensoren 14 ist eine gezielte Positionserfassung der Hände 24 des Fahrers 20 und, gegebenenfalls, zusätzlich auch seines Kopfes 22 bzw. Oberkörpers 23 möglich.

Durch Auswertung der Signale von Sensoren 14 auf gegenüberliegenden Seiten des Lenkradkranzes 12, bezüglich der Drehachse R, können Rückschlüsse auf z.B. die Position des Oberkörpers 23 oder Kopfes 22 des Fahrers 20 relativ zur Drehachse R des Lenkrades 10 gezogen werden. Genauso könnte der Abstand des Kopfes 22 bzw. des Oberkörpers 23 des Fahrers 20 zum Lenkrad erfaßt werden. Die Reichweite der kapazitiven Sensoren 14 muß dementsprechend gewählt werden.

Die hier gezeigten Sensoren 14 bestehen hauptsächlich aus einer Vliesmatte 32, in die elektrische Leiter 34 eingeflochten sind. Dies ist schematisch in Figur 4 gezeigt.

Dieser Aufbau entspricht dem einer bekannten Heizmatte, die zur Lenkradheizung eingesetzt wird. Entsprechend ist es auch möglich, Abschnitte einer derartigen Lenkradheizung als Sensoren 14 zu gestalten, so daß die Leiter als Heizung und zugleich als Sensoren eingesetzt sind.

Die Sensoren 14 lassen sich einfach zwischen der ersten und der zweiten Umhüllung 28, 30 anordnen und der Geometrie des Lenkradkranzes 12 anpassen. Sie werden vom Fahrer durch die zweite Umhüllung 30 nicht wahrgenommen.

Selbstverständlich ist auch die Verwendung jedes anderen geeigneten kapazitiven Sensors möglich. Sensoren 14' können auch direkt am Skelett 26 oder außerhalb der zweiten Umhüllung 30 plaziert sein, wie in Figur 3 angedeutet ist.

Im hier gezeigten Beispiel erzeugen die Sensoren 14 das elektrische oder elektromagnetische Feld 16. Genausogut kann das Feld 16 aber auch aus einer externen Quelle stammen.

Es wäre auch möglich, Sensoren 14 an den Speichen des Lenkrads 10 anzuordnen.

## Patentansprüche

1. Fahrzeugsicherheitssystem mit einem Fahrzeuglenkrad (10), das einen Lenkradkranz (12) aufweist, und mit wenigstens einem kapazitiven Sensor (14), der eine Veränderung eines elektrischen oder elektromagnetischen Felds (16) erfaßt,
wobei der Sensor (14) im oder am Lenkradkranz (12) angeordnet ist,
**dadurch gekennzeichnet, daß** der Sensor (14) eine flexible Matte mit darin aufgenommenen langgestreckten elektrischen Leitern (34) enthält.

2. Fahrzeugsicherheitssystem nach Anspruch 1, **dadurch gekennzeichnet, daß** mehrere Sensoren (14) im oder am Lenkradkranz (12) angeordnet sind.

3. Fahrzeugsicherheitssystem nach einem der vorhergehenden Ansprüche, **dadurch gekennzeichnet, daß** in einem Schnitt in radialer Richtung in Umfangsrichtung (U_{K}) in oder am Lenkradkranz (12) mehrere Sensoren (14) angeordnet sind.

4. Fahrzeugsicherheitssystem nach einem der vorhergehenden Ansprüche, **dadurch gekennzeichnet, daß** in einem Schnitt senkrecht zur Drehachse (R) des Lenkrads (10) in Umfangsrichtung (U_{R}) in oder am Lenkradkranz (12) mehrere Sensoren (14) angeordnet sind.

5. Fahrzeugsicherheitssystem nach einem der vorhergehenden Ansprüche, **dadurch gekennzeichnet, daß** der Sensor (14) unter einer den Lenkradkranz (12) nach außen abschließenden Umhüllung (30) angeordnet ist.

6. Fahrzeugsicherheitssystem nach einem der vorhergehenden Ansprüche, **dadurch gekennzeichnet, daß** der Sensor (14) oberhalb einer ein Skelett (26) des Lenkradkranzes (12) umgebenden Umhüllung (28) angeordnet ist.

7. Fahrzeugsicherheitssystem nach einem der vorhergehenden Ansprüche, **dadurch gekennzeichnet, daß** der Sensor (14) eine Vliesmatte (32) enthält.

8. Fahrzeugsicherheitssystem nach einem der vorhergehenden Ansprüche, **dadurch gekennzeichnet, daß** der Sensor (14) durch wenigstens einen Abschnitt einer Lenkradheizung gebildet ist.

9. Fahrzeugsicherheitssystem nach einem der vorhergehenden Ansprüche, **dadurch gekennzeichnet, daß** es so ausgebildet ist, daß es Anzahl und/oder Position der Hände (24) am Lenkrad (10) erfaßt.

10. Fahrzeugsicherheitssystem nach einem der vorhergehenden Ansprüche, **dadurch gekennzeichnet, daß** ein Gassacksystem (11) und eine Steuereinheit (18) vorgesehen sind, wobei das Gassacksystem (11) in Abhängigkeit der vom Sensor (14) erfaßten Daten über die Steuereinheit (18) angesteuert wird.

11. Fahrzeugsicherheitssystem nach einem der vorhergehenden Ansprüche, **dadurch gekennzeichnet, daß** eine Steuereinheit (18) vorgesehen ist, die mit Hilfe der vom Sensor (14) erfaßten Daten eine Position des Kopfes (22) und/oder Oberkörpers (23) eines Fahrzeuginsassen (20) bestimmt.

12. Fahrzeugsicherheitssystem nach einem der vorhergehenden Ansprüche, **dadurch gekennzeichnet, daß** eine Steuereinheit (18) vorgesehen ist, die mit Hilfe der vom Sensor (14) erfaßten Daten Anzahl und/oder Position der Hände (24) am Lenkrad (10) bestimmt.

## Claims

1. A vehicle safety system comprising a vehicle steering wheel (10) which has a steering wheel rim (12), and at least one capacitive sensor (14) which detects an alteration to an electric or electromagnetic field (16),
the sensor (14) being arranged in or on the steering wheel rim (12),
**characterized in that** the sensor (14) contains a flexible mat with elongated electric leads (34) held therein.

2. The vehicle safety system according to Claim 1, **characterized in that** several sensors (14) are arranged in or on the steering wheel rim (12).

3. The vehicle safety system according to any of the preceding claims, **characterized in that** in a section in the radial direction several sensors (14) are arranged in or on the steering wheel rim (12) in the circumferential direction (U_{K}).

4. The vehicle safety system according to any of the preceding claims, **characterized in that** in a section perpendicular to the rotation axis (R) of the steering wheel (10) several sensors (14) are arranged in or on the steering wheel rim (12) in the circumferential direction (U_{R}).

5. The vehicle safety system according to any of the preceding claims, **characterized in that** the sensor (14) is arranged under a covering (30) closing off the steering wheel rim (12) to the exterior.

6. The vehicle safety system according to any of the preceding claims, **characterized in that** the sensor (14) is arranged above a covering (28) surrounding a skeleton (26) of the steering wheel rim (12).

7. The vehicle safety system according to any of the preceding claims, **characterized in that** the sensor (14) contains a fleece mat (32).

8. The vehicle safety system according to any of the preceding claims, **characterized in that** the sensor (14) is formed by at least one section of a steering wheel heating arrangement.

9. The vehicle safety system according to any of the preceding claims, **characterized in that** it is configured to detect the number and/or the position of the hands (24) on the steering wheel (10).

10. The vehicle safety system according to any of the preceding claims, **characterized in that** a gas bag system (11) and a control unit (18) are provided, the gas bag system (11) being controlled by means of the control unit (18) as a function of the data detected by the sensor (14).

11. The vehicle safety system according to any of the preceding claims, **characterized in that** a control unit (18) is provided, which by means of the data detected by the sensor (14) determines a position of the head (22) and/or of the upper body (23) of a vehicle occupant (20).

12. The vehicle safety system according to any of the preceding claims, **characterized in that** a control unit (18) is provided, which by means of the data detected by the sensor (14) determines the number and/or the position of the hands (24) on the steering wheel (10).

## Revendications

1. Système de sécurité pour véhicule, comportant un volant de direction de véhicule (10) qui présente une couronne de volant de direction (12), et au moins un capteur (14) capacitif qui détecte une modification d'un champ électrique ou électromagnétique (16),
le capteur (14) étant agencé dans ou sur la couronne de volant de direction (12),
**caractérisé en ce que** le capteur (14) contient une natte flexible dans laquelle sont reçus des conducteurs (34) électriques allongés.

2. Système de sécurité pour véhicule selon la revendication 1, **caractérisé en ce que** plusieurs capteurs (14) sont agencés dans ou sur la couronne de volant de direction (12).

3. Système de sécurité pour véhicule selon l'une des revendications précédentes, **caractérisé en ce que** dans une coupe en direction radiale dans la direction périphérique (U_{K}), plusieurs capteurs (14) sont agencés dans ou sur la couronne de volant de direction (12).

4. Système de sécurité pour véhicule selon l'une des revendications précédentes, **caractérisé en ce que** dans une coupe perpendiculaire à l'axe de rotation (R) du volant de direction (10) en direction périphérique (U_{R}), plusieurs capteurs (14) sont agencés dans ou sur la couronne de volant de direction (12).

5. Système de sécurité pour véhicule selon l'une des revendications précédentes, **caractérisé en ce que** le capteur (14) est agencé au-dessous d'une enveloppe (30) fermant la couronne de volant de direction (12) vers l'extérieur.

6. Système de sécurité pour véhicule selon l'une des revendications précédentes, **caractérisé en ce que** le capteur (14) est agencé au-dessus d'une enveloppe (28) entourant un squelette (26) de la couronne de volant de direction (12).

7. Système de sécurité pour véhicule selon l'une des revendications précédentes, **caractérisé en ce que** le capteur (14) contient une natte en non-tissé (32).

8. Système de sécurité pour véhicule selon l'une des revendications précédentes, **caractérisé en ce que** le capteur (14) est formé par au moins un tronçon d'un chauffage de volant de direction.

9. Système de sécurité pour véhicule selon l'une des revendications précédentes, **caractérisé en ce qu'**il est réalisé de telle sorte qu'il détecte le nombre et/ou la position des mains (24) sur le volant de direction (10).

10. Système de sécurité pour véhicule selon l'une des revendications précédentes, **caractérisé en ce qu'**il est prévu un système à coussin à gaz (11) et une unité de commande (18), le système à coussin à gaz (11) étant piloté via l'unité de commande (18) en fonction des données saisies par le capteur (14).

11. Système de sécurité pour véhicule selon l'une des revendications précédentes, **caractérisé en ce qu'**il est prévu une unité de commande (18) qui détermine à l'aide des données saisies par le capteur (14) une position de la tête (22) et/ou du torse (23) d'un occupant de véhicule (20).

12. Système de sécurité pour véhicule selon l'une des revendications précédentes, **caractérisé en ce qu'**il est prévu une unité de commande (18) qui détermine à l'aide des données saisies par le capteur (14) le nombre et/ou la position des mains (24) sur le volant de direction (12).
